Europäisches Patentamt

**European Patent Office**

**Office européen des brevets**

(11) Numéro de publication: **0 279 724 B1**

(12)

# FASCICULE DE BREVET EUROPEEN

(45) Date de publication de fascicule du brevet: **28.04.93** (51) Int. Cl.5: **C08F 285/00**, C08F 291/02

(21) Numéro de dépôt: **88400190.0**

(22) Date de dépôt: **28.01.88**

Le dossier contient des informations techniques présentées postérieurement au dépôt de la demande et ne figurant pas dans le présent fascicule.

(54) **Interpolymère composite multicouches comportant une distribution bimodale de particules, son procédé de préparation et son application au renforcement de matrices thermoplastiques.**

(30) Priorité: **30.01.87 FR 8701169**

(43) Date de publication de la demande:
**24.08.88 Bulletin 88/34**

(45) Mention de la délivrance du brevet:
**28.04.93 Bulletin 93/17**

(84) Etats contractants désignés:
**AT BE CH DE ES FR GB GR IT LI LU NL SE**

(56) Documents cités:
**US-A- 4 086 300**
**US-A- 4 145 380**
**US-A- 4 419 492**

(73) Titulaire: **ELF ATOCHEM S.A.**
**4 & 8, Cours Michelet La Défense 10**
**F-92800 Puteaux(FR)**

(72) Inventeur: **Gaillard, Patrice**
**Chemin des Ecouloirs**
**F-62153 Souchez(FR)**
Inventeur: **Robinet, Jean Claude**
**99, rue Jean Biondi**
**F-60260 Lamorlaye(FR)**

(74) Mandataire: **Rochet, Michel et al**
**ELF ATOCHEM S.A. Département Propriété**
**Industrielle 4-8, Cours Michelet La Défense**
**10 - Cedex 42**
**F-92091 Paris-La-Défense (FR)**

Rank Xerox (UK) Business Services
(3.10/3.5x/3.0.1)

## Description

La présente invention se rapporte à une matière interpolymère renforçatrice de matrices thermoplastiques rigides, à sa préparation, ainsi qu'aux compositions renforcées correspondantes.

Les polymères thermoplastiques rigides constituent une classe de composés bien connus, parmi lesquels on peut citer notamment les polymères acryliques, tels que le poly(méthacrylate de méthyle) et de nombreux copolymères de méthacrylate de méthyle. Ces polymères thermoplastiques, du fait qu'il sont rigides, sont susceptibles de se casser pendant les diverses phases de leur transformation, de même que pendant leur transport et leur utilisation.

On sait que des matières élastomères peuvent être ajoutées à ces polymères thermoplastiques rigides pour améliorer leur résistance au choc. Ces élastomères sont ajoutés en quantités variables, habituellement d'au moins 5%, et, généralement, d'au moins 15% par rapport au poids du polymère rigide. Toutefois, une telle amélioration est souvent obtenue aux dépens des propriétés optiques et de la bonne tenue aux températures élevées.

Sont proposées, dans le brevet français n° 2 092 389, des compositions remédiant partiellement à ces inconvénients, par suite de la présence d'un additif améliorant principalement les propriétés optiques et constitué par un interpolymère de morphologie mou-dur, dont la première phase élastomère de coeur comprend notamment un acrylate d'alkyle, un monomère de réticulation et un monomère de greffage, et dont la phase rigide finale (ou couche externe) est notamment un poly(méthacrylate d'alkyle).

Conformément au certificat d'addition n° 2 159 822, on prévoit, comme additif renforçateur, un interpolymère de morphologie dur-mou-dur dont le premier stade, non-élastomère, est polymérisé à partir de, par exemple, méthacrylate d'alkyle et, le cas échéant, un monomère de réticulation et un monomère de greffage ; dont le stade élastomère intermédiaire est notamment un copolymère acrylate d'alkyle-styrène, pouvant inclure un monomère de réticulation et un monomère de greffage, et dont le stade final est par exemple polymérisé à partir de méthacrylate d'alkyle. Le diamètre des particules de l'interpolymère peut alors varier de 100 à 300 nm, la plage préférée allant de 160 à 280 nm.

Par ailleurs, dans la demande de brevet déposée ce jour au nom de la Demanderesse et ayant pour titre : "Interpolymère composite à plusieurs couches, son procédé de préparation, son application au renforcement de matrices thermoplastiques rigides et compositions renforcées correspondantes", on décrit un interpolymère produit séquentiellement avec les trois stades suivants : élastomère-élastomère-non élastomère, les monomères mis en oeuvre pour constituer le premier stade élastomère de coeur ne comprenant ni monomère de réticulation ni monomère de greffage, alors que les monomères mis en oeuvre pour constituer le second stade élastomère en comprennent. Cet interpolymère permet d'atteindre, pour une matrice renforcée avec un tel interpolymère, des valeurs de résistance au choc et des qualités optiques particulièrement bonnes.

On connaît également, par le brevet américain US-A-4 419 492, un procédé de préparation de polymélanges d'ABS dans lesquels sont dispersées des particules de caoutchouc greffé, petites (10-800 nm) et grandes (1000-10 000 nm), conférant aux polymélanges une plus grande ténacité et une plus grande résistance chimique. Le procédé consiste à extraire de petites particules de caoutchouc greffé dans une phase de monomères séparée, laquelle est soumise à une polymérisation en masse pour donner une première fusion ; à mélanger ladite première fusion avec une seconde fusion dans laquelle sont présentes de plus grosses particules de caoutchouc greffé, afin de former une troisième fusion dont on élimine les monomères pour obtenir un polymélange d'ABS ayant une distribution bimodale de la dimension des particules de caoutchouc greffé.

Le brevet américain US-A-4 086 300 décrit un polymère multiphases, destiné à modifier des polycarbonamides pour les rendre plus résistants au choc, ce polymère multiphases comprenant une première phase élastomère, polymérisée à partir de monomères comprenant majoritairement un acrylate d'alkyle ou un butadiène, et une phase finale rigide, polymérisée à partir de monomères comprenant un monomère copolymérisable, contenant une fraction réagissant avec les amines, de préférence un acide carboxylique (acide acrylique ou méthacrylique) et un méthacrylate d'alkyle, du styrène, de l'acrylonitrile ou du méthacrylonitrile. En contrôlant les variables de polymérisation, il est possible de contrôler la dimension des particules de l'élastomère, et la dimension des particules peut aller d'une valeur aussi faible qu'environ 50 nm, ou même moins, jusqu'à environ 300 nm ou plus.

La Société Déposante a maintenant découvert que si l'on utilise un interpolymère comprennent un mélange de deux populations de particules de tailles suffisamment différentes, on pouvait améliorer encore la résistance au choc, sans nuire à la transparence des matrices résistances. On a en particulier constaté que l'on peut obtenir des valeurs de choc Izod entaillé pouvant être, si l'on choisit correctement le rapport des deux populations de particules mises en jeu, nettement supérieures à celles obtenues avec une

2

EP 0 279 724 B1

population de particules de grande taille seulement.

La présente invention a donc d'abord pour objet un interpolymère composite multi-couches comprenant au moins :

- un stade interne, élastomère, ayant en soi une température de transition vitreuse inférieure ou égale à 25°C, polymérisé à partir d'un mélange comprenant, pour 100 parties en poids :

  (a) de 50 à 99,9 parties en poids d'au moins un monomère principal choisi parmi les diènes conjugués et les acrylates d'alkyle ou d'aralkyle;

  (b) de 0 à 49,9 parties en poids d'au moins un autre monomère à insaturation monoéthylénique copolymérisable avec ledit monomère principal,

  (c) de 0,05 à 8 parties en poids d'au moins un monomère de réticulation ; et

  (d) de 0,05 à 6 parties en poids d'au moins un monomère de greffage ; et

- un stade externe, non élastomère, relativement dur, ayant en soi une température de transition vitreuse supérieure à 25°C, polymérisé en présence du produit du stade précédent, à partir d'un mélange comprenant, pour 100 parties en poids :

  (a) de 50 à 99,9 parties en poids d'au moins un monomère principal choisi parmi les méthacrylates d'alkyle dont le groupe alkyle comporte de 1 à 4 atomes de carbone, les hydrocarbures vinylaromatiques et les nitriles insaturés ;

  (b) de 0,1 à 50 parties en poids d'au moins un monomère à insaturation monoéthylénique copolymérisable avec ledit monomère principal, et

  (c) de 0 à 5 parties en poids d'au moins un agent limiteur de chaîne,

caractérisée par le fait qu'il comporte une distribution bimodale de particules et qu'il consiste en un mélange :

  (1) d'une population de particules dont le diamètre moyen est compris entre environ 40 et 150 nm, de préférence environ 40 à 120 nm, et

  (2) d'une population de particules dont le diamètre moyen est compris entre environ 160 et 500 nm, de préférence entre environ 180 et 300 nm,

dans un rapport en poids de la population (1) à la population (2) compris entre environ 5/95 et environ 95/5.

On peut également prévoir qu'au moins une fraction des particules constituant l'interpolymère composite selon la présente invention, comporte un premier stade, formant le coeur des particules, qui est un stade non élastomère relativement dur, ayant une température de transition vitreuse supérieure à 25°C, et polymérisé à partir d'un mélange comprenant, pour 100 parties en poids :

  (a) de 70 à 99,9 parties en poids d'au moins un monomère principal choisi parmi les méthacrylates d'alkyle dont le groupe alkyle comporte de 1 à 4 atomes de carbone, les hydrocarbures vinylaromatiques et les nitriles insaturés (comme l'acrylonitrile et le méthacrylonitrile),

  (b) de 0,1 à 10 parties en poids d'au moins un autre monomère à insaturation monoéthylénique copolymérisable avec ledit monomère principal ;

  (c) de 0 à 10 parties en poids d'au moins un monomère de réticulation ; et

  (d) de 0 à 10 parties en poids d'au moins un monomère de greffage,

les stades internes et externe constituant respectivement les second et troisième stades des particules d'interpolymère. Dans ce cas, la morphologie obtenue sera dite dur-mou-dur.

On peut aussi prévoir qu'au moins une fraction des particules constituant l'interpolymère comporte un premier stade, formant le coeur des particules, élastomère relativement mou, ayant une température de transition vitreuse inférieure ou égale à 25°C, polymérisé, en l'absence de monomère de réticulation et de monomère de greffage, à partir d'un mélange comprenant, pour 100 parties en poids :

  (a) de 50 à 100 parties en poids d'au moins un monomère principal choisi parmi les diènes conjugués et les acrylates d'alkyle ou d'aralkyle; et,

  (b) de 0 à 50 parties en poids d'au moins un autre monomère à insaturation éthylénique copolymérisable avec ledit monomère principal,

les stades interne et externe constituant respectivement les second et troisième stades des particules d'interpolymère. Dans ce cas, la morphologie obtenue sera dite mou-mou-dur.

Dans le cas d'une morphologie à deux couches, de type mou-dur, les stades interne et externe peuvent en particulier représenter, pour 100 parties en poids de l'interpolymère de chaque population, respectivement 0,5 à 90 parties en poids et 99,5 à 10 parties en poids.

Dans le cas d'une morphologie à trois couches de type mou-mou-dur, les premier, second et troisième stades peuvent en particulier représenter, pour 100 parties en poids de l'interpolymère de chaque population, respectivement 3 à 80 parties en poids, 10 à 60 parties en poids et 10 à 60 parties en poids.

Dans le cas d'une morphologie à trois couches de type dur-mou-dur, les premier, second et troisième stades peuvent en particulier représenter, pour 100 parties en poids de l'interpolymère de chaque

3

population, respectivement 10 à 40 parties en poids, 20 à 60 parties en poids et 10 à 70 parties en poids.

Dans un mode de réalisation préféré, le rapport en poids de la population (1) à la population (2) est compris entre 90/10 et 10/90, et encore plus particulièrement entre 80/20 et 20/80.

Parmi les diènes conjugués entrant dans la définition de (a) d'un stade élastomère, on peut mentionner le butadiène-1,3, l'isoprène, le chloroprène et le diméthyl-2,3 butadiène. Parmi les acrylates d'alkyle entrant dans cette même définition, on peut mentionner ceux qui présentent des groupes alkyle en $C_1$-$C_{15}$, avantageusement en $C_1$-$C_8$, et, de préférence, en $C_2$-$C_8$. En particulier, on peut citer l'acrylate de n-butyle, l'acrylate d'éthyle, l'acrylate de 2-éthylhexyle et l'acrylate d'isobutyle. On pourrait également mettre en oeuvre des acrylates d'alkyle dont les groupes alkyle ont une chaîne plus longue. Parmi les acrylates d'aralkyle entrant dans la définition précitée, on peut citer ceux dans lesquels la partie cyclique contient 5, 6 ou 7 atomes de carbone, avec ou sans pont alkyle supplémentaire, et la partie alkyle contient jusqu'à 15 atomes de carbone. Cette liste des acrylates englobe également les acrylates substitués, tels que les acrylates d'alkylthioalkyle (par exemple, acrylate d'éthylthioéthyle) et les acrylates d'alcoxyalkyle (par exemple, acrylate de méthoxyéthyle).

Parmi les monomères entrant dans la définition de (a) d'un stade non élastomère, on peut mentionner le méthacrylate de méthyle, que l'on préfère, le méthacrylate d'éthyle, le méthacrylate d'isopropyle, le méthacrylate de n-butyle, le méthacrylate de sec-butyle, le méthacrylate de tertio-butyle, le styrène, l'α-méthylstyrène, le monochlorostyrène, le tertiobutylstyrène, le vinyltoluène.

Les monomères à insaturation monoéthylénique entrant dans la définition de (b) d'un stade non élastomère sont choisis notamment parmi les acrylates d'alkyle, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique et l'acide méthacrylique, ceux entrant dans la définition de (b) d'un stade élastomère pouvant être choisis parmi les méthacrylates d'alkyle, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique, l'acide méthacrylique, ainsi que les hydrocarbures vinylaromatiques tels que le styrène, l'α-méthylstyrène, le vinyltoluène.

Quant aux monomères de réticulation, entrant dans la définition de (c) d'un stade de coeur, ou d'un stade intermédiaire suivant le cas, ile peuvent être notamment choisis parmi les polyméthacrylates et polyacrylates de polyols, comme les diméthacrylates d'alkylène-glycol, tels que le diméthoacrylate d'éthylène-glycol, la diméthacrylate de 1,3-butylène glycol, le diméthacrylate de 1,4-butylène-glycol et le diméthacrylate de propylène-glycol, les diacrylates d'alkylène-glycol, tels que le diacrylate d'éthylène-glycol, le diacrylate de 1,3- ou de 1,4-butylène-glycol, et le triméthacrylate de triméthylolpropane ; les polyvinyl-benzènes, tels que le divinyl benzène ou le trivinyl benzène; et l'acrylate et le méthacrylate de vinyle.

Les monomères de greffage, entrant dans la définition de (d) d'un stade de coeur, ou d'un stade intermédiaire, suivant le cas, peuvent être choisis notamment parmi les esters d'allyle, de méthallyle ou de crotyle d'acides ou diacides carboxyliques α,β-insaturés, comme les mono- et di- esters allyliques, méthallyliques et crotyliques de l'acide acrylique, de l'acide méthacrylique, de l'acide maléique, de l'acide fumarique et de l'acide itaconique ; l'éther d'allyle, l'éther de méthallyle et l'éther de crotyle et de vinyle ; le thioéther d'allyle, le thioéther de méthallyle et le thioéther de crotyle et de vinyle ; le N-allyl-, le méthallyl- ou le crotyl-maléimide ; les esters vinyliques de l'acide 3-buténoïque et de l'acide 4-penténoïque ; le cyanurate de triallyle ; le phosphonate de 0-allyle, de méthallyle ou de crotyl-O-alkyle, d'aryle, d'alkaryle ou d'aralkyl-P-vinyle, d'allyle ou de méthallyle; le phosphate de triallyle, de triméthyallyle ou de tricrotyle; le phosphate de O-vinyle, de O,O-diallyle, de diméthallyle ou de dicrotyle ; les mono- et di-esters cycloalcényliques de l'acide acrylique, de l'acide méthacrylique, de l'acide maléique, de l'acide fumarique, de l'acide itaconique, tels que l'acrylate de 2-, 3- ou 4-cyclohexényle ; les mono- et di-esters bicyclo-(2,2,1)-hept-5-ène-2-yliques de l'acide acrylique, de l'acide méthacrylique, de l'acide maléique, de l'acide fumarique et de l'acide itaconique ; les éthers vinyliques et les thioéthers vinyliques des cycloalcénols et des cycloalcène-thiols, tels que l'éther de vinyle et de cyclohex-4-ène-1-yle, l'éther vinylique de bicyclo-(2,2,1)-hept-5-ène-2-ol ; les esters vinyliques des acides cycloalcène-carboxyliques, tels que l'acide vinylcyclohex-3-ène-1-carboxylique et le bicyclo-(2,2,1)-hept-5-ène-2-carboxylate de vinyle.

Parmi les monomères de greffage, on préfère des composés contenant au moins un groupe allyle, en particulier les esters allyliques des acides à insaturation éthylénique. On préfère plus particulièrement l'acrylate d'allyle, le méthacrylate d'allyle, le maléate de diallyle, le fumarate de diallyle, l'itaconate de diallyle, le maléate acide d'allyle, le fumarate acide d'allyle et l'itaconate acide d'allyle.

Les agents limiteurs de chaînes entrant dans la définition de (c) d'un stade final peuvent être choisis notamment parmi les mercaptans, les polymercaptans, les composés polyhalogénés, les monoterpènes diinsaturés et les diterpènes monoinsaturés. On peut mentionner le tertiododécylmercaptan, le sec.-

butylmercaptan, le n-dodécylmercaptan et le terpinolène.

Les interpolymères composites selon l'invention se présentent sous la forme d'un latex à une concentration de 20 à 50% en poids, de préférence de 30 à 40% en poids, dans l'eau, ou bien encore sous une forme pulvérulente obtenue à partir dudit latex.

Pour préparer l'interpolymère selon l'invention, on peut mélanger, dans le rapport voulu, les populations (1) et (2) de particules de dimensions voulues, préparées séquentiellement par polymérisation en émulsion, dans un milieu aqueux, en présence d'un initiateur de radicaux libres et d'un agent émulsifiant.

Un second procédé pour préparer les interpolymères selon l'invention consiste à :

- former séparément, par polymérisation, une semence constituée par le (ou les) stade(s) interne(s) des populations (1) et (2) ;
- mélanger les deux semences obtenues à l'étape précédente;
- ajouter la charge des monomères correspondant au stade externe et la soumettre à des conditions de polymérisation,

chaque polymérisation étant effectuée en émulsion, dans un milieu aqueux, en présence d'au moins un initiateur de radicaux libres et d'au moins un agent émulsifiant.

La proportion d'émulsifiant est, de préférence, inférieure à 1% en poids, notamment comprise entre 0,1 et 0,6% en poids, sur la base du poids total des monomères polymérisables chargés à chacun des stades.

Comme agents émulsifiants utilisables, on trouve :

- des agents tensio-actifs anioniques comme les alkyl benzène-sulfonates alcalins, tels que le dodécylbenzène-sulfonate de sodium, les alkyl-phénoxypolyéthylène-sulfonates alcalins, le lauryl-sulfate de sodium ou de potassium, des sels d'amines à longues chaînes et des sels d'acides carboxyliques et sulfoniques à longues chaînes ;
- des agents tensio-actifs non-ioniques, notamment ceux comportant des motifs oxazoline ; ceux comportant des motifs oxyde d'alkylène, par exemple, les agents tensio-actifs alkylphénylpolyoxyéthylénés, les copolymères styrène-oxyde d'éthylène, les copolymères oxyde de propylène-oxyde d'éthylène et les esters d'alkyle polyoxyéthylénés ; les esters et éthers d'acides gras de sorbitan ou de sorbitol, plus particulièrement, l'hexaoléate de sorbitol polyoxyéthyléné, le sesquioléate de sorbitan, le trioléate de sorbitan et le monooléate de sorbitol polyoxyéthyléné; et les esters ou éthers de cellulose ;
- les agents tensio-actifs cationiques, comme les sels d'onium (ammonium, phosphonium ou pyridinium) quaternaires avec un substituant hydrophobant tel qu'un reste alkyle à longue chaîne, par exemple les sels de tryméthylalkylammonium, dont le groupe alkyle possède une chaîne longue d'au moins 8 atomes de carbone ; et les sels d'onium à substituant stériquement encombrant, tel que le bleu de méthylène et l'acétate de cyclohexylamine ;
- ou encore des mélanges de ces différents types d'agents tensio-actifs.

Le milieu de polymérisation contient, à chaque stade, une quantité efficace d'au moins un initiateur de radicaux libres, qui est activé soit par la chaleur, soit par une réaction d'oxydo-réduction (rédox). Les initiateurs utilisables sont de préférence choisis parmi les persulfates, les peroxydes, les hydroperoxydes et les composés diazoïques tels que par exemple l'azobis-isobutyronitrile, le 2,2'-azobis-(2,4-diméthylvaléroni-trile), le 1,1'- azobis-1-cyclohexanecarbonitrile, le perbenzoate de tertiobutyle, le peroxy-isopropylcarbonate de tertio-butyle, etc. Lorsqu'un persulfate est choisi en tant qu'initiateur, il peut être utilisé en combinaison avec au moins un réducteur choisi parmi les polyhydrophénols, le sulfite et le bisulfite de sodium, le diméthylaminopropionitrile les diazomercaptans et le ferricyanures.

La polymérisation peut être conduite à des températures comprises entre environ 0 et 125°C, la gamme préférée allant de 30 à 95°C.

La quantité d'initiateur de radicaux libres et, le cas échéant, de réducteur utilisé, varie en fonction des monomères, de la température et du mode d'addition, mais, en règle générale, reste comprise entre environ 0,01 et 2% en poids dans chaque stade de polymérisation, par rapport aux monomères présents.

On peut isoler l'interpolymère obtenu par coagulation ou par sécharge par pulvérisation ou atomisation.

La présente invention porte également sur l'application de la matière interpolymère telle que définie cidessus, au renforcement d'une matrice d'un polymère thermoplastique rigide d'au moins un monomère choisi parmi les méthacrylates d'alkyle, dont le groupe alkyle comprend de 1 à 4 atomes de carbone, et les hydrocarbures vinylaromatiques, ou d'un polymère de plus de 50% en poids d'au moins l'un de ces monomères et d'au moins un autre monomère copolymérisable à insaturation monoéthylénique. Dans cette application, la présente invention concerne une composition thermoplastique comprenant, pour 100 parties en poids :

- de 10 à 99 parties en poids, en particulier de 50 à 99 parties en poids, d'un polymère thermoplastique rigide d'au moins un monomère choisi parmi les méthacrylates d'alkyle , dont le groupe alkyle comprend de 1 à 4 atomes de carbone, et les hydrocarbures vinylaromatiques, ou d'un polymère de plus de 50% en poids d'au moins l'un de ces monomères et d'au moins un autre monomère copolymérisable à insaturation monoéthylénique; et.

- de 90 à 1 parties en poids, en particulier de 50 à 1 parties en poids, d'une matière interpolymère telle que définie ci-dessus.

Dans un mode de réalisation préféré, la partie élastomére de la matière interpolymère présente dans la composition thermoplastique représente de 18 à 40 parties en poids, de préférence, de 24 à 32 parties en poids, de la composition thermoplastique totale. Etant donné que c'est la phase élastomère totale de la matière interpolymère composite qui confère la résistance au choc, ladite matière interpolymère est ajoutée à la matrice thermoplastique rigide pour avoir une proportion convenable de l'élastomère, en fonction des proportions indiquées et la (ou les) phase(s) rigide(s) de la matière interpolymère composite doit (doivent) être considérée(s) comme faisant partie de la totalité de la phase rigide pour déterminer les proportions de tels mélanges.

Le mélange de la matière interpolymère composite et de la matrice thermoplastique rigide peut être effectué par n'importe quel procédé connu. On peut ainsi mélanger les deux composants se présentant tous deux sous la forme d'une poudre, afin de préparer une composition de moulage. On peut effectuer le mélange en mettant la matière interpolymère en suspension dans le mélange des monomères ou dans le sirop de propolymère devant conduire à la matrice thermoplastique rigide. On peut aussi placer la matière interpolymère composite en émulsion, suspension et dispersion dans l'eau ou un composé organique, dans le mélange à couler devant conduire à la matrice, l'eau ou le composé organique étant éliminé avant ou après la formation, par coulée, de la matrice. La matière interpolymère et la matrice thermoplastique rigide peuvent être mélangés tous deux à l'état d'émulsion, de suspension ou de solution dans un système aqueux ou non aqueux, les particules étant isolées de l'eau ou du composé organique par coagulation, séchage par pulvérisation, ou par des moyens connus de séparation, et ou peut ensuite les traiter avec ou sans étape intermédiaire de séchage. Les masses coulées que l'on peut obtenir peuvent ensuite être transformées en granules et les granules, traités dans une extrudeuse, ou un appareillage de moulage par injection. On peut aussi couler les mélanges en feuilles entre des plaques de verre ou des plaques métalliques, par des techniques connues, ce procédé étant préférable pour la préparation d'un matériau de vitrage.

Enfin, l'invention concerne des articles façonnés par exemple en feuilles (matériaux de vitrage, installations d'éclairage, enseignes et appareils de publicité lumineuse), ainsi que des articles moulés obtenus par coulée ou par injection à partir de le composition thermoplastique telle que définie ci-dessus.

On peut naturellement incorporer dans les matières interpolymères de l'invention et les matrices renforcées par de telles matières interpolymères, un certain nombre d'additifs usuels, selon des techniques bien connues des spécialistes, dans des proportions usuelles.

Aussi, on peut envisager d'incorporer des composés qui stabilisent les produits et empêchent une dégradation par oxydation, par la chaleur et par la lumière ultraviolette. Les stabilisants peuvent être introduits à une étape quelconque du procédé de polymérisation conduisant à la formation de ladite matière interpolymère composite et/ou de la matrice, jusqu'au dernier stade de façonnage du produit final. On préfère cependant incorporer les stabilisants au cours des polymérisations ou dans les latex des polymères résultant de la polymérisation.

Les stabilisants vis-à-vis de la dégradation par oxydation ou par la chaleur, qui peuvent être utilisés ici, comprennent ceux utilisés généralement dans les produits de polymérisation par addition. On peut citer, à titre d'exemples, des phénols ayant un empêchement stérique, des hydroquinones, des phosphites, leurs dérivés et leurs combinaisons.

Les stabilisants vis-à-vis de la lumière ultraviolette peuvent également être ceux utilisés généralement pour les produits de polymérisation par addition. A titre d'exemples de tels stabilisants, on peut citer divers résorcinols substitués, salicylates, benzotriazoles, benzophénones, et leurs combinaisons.

D'autre substances pouvant être incorporées dans les matières interpolymères et matrices renforcées de la présente invention comprennent des lubrifiants comme l'acide stéarique, l'alcool stéarique et l'eicosanol ; des colorants comprenant des colorants organiques, comme le rouge d'anthraquinone, des pigments organiques et des vernis, comme le bleu de phtalocyanine, et des pigments minéraux, comme le bioxyde de titane et le sulfure de cadmium; des charges et des diluants particulaires, comme le noir de carbone, la silica amorphe, l'amiante, les fibres de verre et le carbonate de magnésium ; des plastifiants, comme le phtalate de dioctyle, le phtalate de dibenzyle, le phtalate de butyl-benzyle et des huiles hydrocarbonées.

On a illustré par les expériences rapportées ci-après l'importance du rapport du mélange des populations de tailles différentes dans la matière interpolymère faisant l'objet de la présente invention.

Dans cette partie expérimentale, on a utilisé les abréviations suivantes:
MAM : méthacrylate de méthyle
AM : acrylate de méthyle
ABu : acrylate de butyle
St : styrène
EDMA : diméthacrylate d'éthylèneglycol
ALMeA : méthacrylate d'allyle
TDM : tert-dodécyl mercaptan

EXEMPLES 1 à 8

**Préparation des semences (stades A) :**

On émulsifie dans l'eau une charge de monomères contenant 95 parties de méthacrylate de méthyle et 5 parties d'acrylate de méthyle, et utilisant, comme émulsifiant le laurate de sodium. La charge des monomères est polymérisée en présence de persulfate de potassium à des températures élevées.

On obtient, d'une part, une semence dont le diamètre des particules est de 80 nm et, d'autre part, une semence dont le diamètre des particules est de 240 nm.

Ces semences sont mélangées dans les différents rapports en poids rapportés aux Tableaux I et II ci-après. Les exemples 1 et 8 sont comparatifs.

**Formation de la couche intermédiaire élastomérique d'une épaisseur théorique de 50 nm :**

On ajoute aux différentes émulsions de polymères, une seconde charge de monomères contenant ABu, St, EDMA et ALMeA, comme indiqué dans le Tableau 1 ci-dessous et on procédé à la polymérisation en utilisant le persulfate de potassium à des températures de 85°C.

**Formation de la couche finale de compatibilisation d'une épaisseur théorique de 10 nm :**

On ajoute ensuite une troisième charge de monomères avec les quantités également mentionnées dans le Tableau I ci-dessous et on procède à la polymérisation en utilisant du persulfate de potassium à des températures élevées, tout en ajustant la quantité ajoutée de savon pour empêcher la formation d'un nombre important de particules nouvelles. On ajoute l'agent limiteur de chaîne TDM pour régler la masse moléculaire des phases rigides de poly(méthacrylate de méthyle).

On isole le polymère par coagulation, ou, de préférence, par séchage par pulvérisation.

Les differentes matières interpolymères obtenues sont mélangées avec une matrice de poly-(méthacrylate de méthyle) commericalisé par la Société ≪ALTULOR≫ sous la marque ≪ALTULITE® 2774≫, possédant un indice de fluidité de 1,5 dg/min. et se présentant sous forme de pastilles de poudre moulable à raison de 40% d'additif pour 60% de matrice. On transfère ces mélanges dans une extrudeuse à une température de fusion de 250°C et à une pression manométrique de la filière de $10^8$ Pa, pour obtenir une matière thermoplastique rigide translucide dont la teneur en élastomère est indiquée également dans le Tableau II.

A partir des différents mélanges, on a moulé des éprouvettes par injection, dont on a mesuré la résistance au choc Izod entaillé à 23°C, selon la norme ISO-R-180. Les résultats sont rapportés dans le Tableau II.

TABLEAU I

| Exemple | Rapport en poids β80/β240 | Poids semence dure β80 (g) | Poids semence dure β240 (g) | Poids des monomères engagés pour Couche élastomère (en g) | | | | Poids des monomères engagés pour Couche de compatibilisation (g) | | |
|---|---|---|---|---|---|---|---|---|---|---|
| | | | | ABu | St | EDMA | ALMeA | MAM | AM | TDM |
| 1 | 100/ 0 | 0 | 8930 | 1600 | 328 | 82,1 | 41,0 | 631,5 | 33,4 | 3,34 |
| 2 | 90/10 | 169 | 19,8 | 184,0 | 37,7 | 9,4 | 4,7 | 101,3 | 5,4 | 0,5 |
| 3 | 80/20 | 135,2 | 35,7 | 150,7 | 30,9 | 7,7 | 3,9 | 82,4 | 4,4 | 0,4 |
| 4 | 60/40 | 135,2 | 95,2 | 161,4 | 33,1 | 8,2 | 4,1 | 86,7 | 4,6 | 0,5 |
| 5 | 50/50 | 135,2 | 142,9 | 170,0 | 34,8 | 8,7 | 4,4 | 90,0 | 4,8 | 0,5 |
| 6 | 40/60 | 108,2 | 171,4 | 146,3 | 30 | 7,5 | 3,7 | 76,2 | 4,0 | 0,4 |
| 7 | 20/80 | 81,0 | 343,0 | 148,2 | 30,4 | 7,6 | 3,8 | 72,2 | 3,8 | 0,4 |
| 8 | 0/100 | 2070 | 0 | 2164,8 | 443,4 | 111 | 55,6 | 1200 | 53,5 | 6,3 |

EP 0 279 724 B1

## TABLEAU II

| Exem-ple | Rapport en poids Ø80/Ø240 | Rapport en nombre N80/N240 | Choc Izod entaillé (en J/m) 230°C |
|---|---|---|---|
| 1 | 100/ 0 | – | 32 |
| 2 | 90/10 | 243 | 42 |
| 3 | 80/20 | 108 | 45 |
| 4 | 60/40 | 40,5 | 45 |
| 5 | 50/50 | 27 | 45 |
| 6 | 40/60 | 18 | 52 |
| 7 | 20/80 | 6,7 | 50 |
| 8 | 0/100 | – | 42 |

**Revendications**
**Revendications pour les Etats contractants suivants : AT, BE, CH, DE, FR, GB, GR, IT, LI, LU, NL, SE**

1. Interpolymère composite multi-couches comprenant au moins :
   - un stade interne, élastomère, ayant en soi une température de transition vitreuse inférieure ou égale à 25°C, polymérisé à partir d'un mélange comprenant, pour 100 parties en poids :
     (a) de 50 à 99,9 parties en poids d'au moins un monomère principal choisi parmi les diènes conjugués et les acrylates d'alkyle ou d'aralkyle;
     (b) de 0 à 49,9 parties en poids d'au moins un autre monomère à insaturation monoéthylénique copolymérisable avec ledit monomère principal ;
     (c) de 0,05 à 8 parties en poids d'au moins un monomère de réticulation ; et
     (d) de 0,05 à 6 parties en poids d'au moins un monomère de greffage ; et
   - un stade externe, non élastomère, relativement dur, ayant en soi une température de transition vitreuse supérieure à 25°C, polymérisé en présence du produit du stade précédent, à partir d'un mélange comprenant, pour 100 parties en poids :
     (a) de 50 à 99,9 parties en poids d'au moins un monomère principal choisi parmi les méthacrylates d'alkyle dont le groupe alkyle comporte de 1 à 4 atomes de carbone, les hydrocarbures vinylaromatiques et les nitrile insaturés ;
     (b) de 0,1 à 50 parties en poids d'au moins un monomère à insaturation monoéthylénique copolymérisable avec ledit monomère principal, et

9

(c) de 0 à 5 parties en poids d'au moins un agent limiteur de chaîne,

caractérisée par le fait qu'il comporte une distribution bimodale de particules et qu'il consiste en un mélange :

(1) d'une population de particules dont la diamètre moyen est compris entre environ 40 et 150 nm; et

(2) d'une population de particules dont le diamètre moyen est compris entre environ 160 et 500 nm, dans un rapport en poids de la population (1) à la population (2) compris entre environ 5/95 et environ 95/5.

2. Interpolymère selon la revendication 1, caractérisé par le fait qu'au moins une fraction des particules le constituant comporte un premier stade, formant le coeur des particules, non élastomère relativement dur, ayant une température de transition vitreuse supérieure à 25°C, polymérisé à partir d'un mélange comprenant, pour 100 parties en poids :

(a) de 70 à 99,9 parties en poids d'au moins un monomère principal choisi parmi les méthacrylates d'alkyle dont le groupe alkyle comporte de 1 à 4 atomes de carbone, les hydrocarbures vinyl-aromatiques et les nitriles insaturés ;

(b) de 0,1 à 10 parties en poids d'au moins un autre monomère à insaturation monoéthylénique copolymérisable avec ledit monomère principal ;

(c) de 0 à 10 parties en poids d'au moins un monomère de réticulation ; et

(d) de 0 à 10 parties en poids d'au moins un monomère de greffage,

les stades interne et externe constituant respectivement les second et troisième stades des particules d'interpolymère.

3. Interpolymère selon la revendication 1, caractérisé par le fait qu'au moins une fraction des particules le constituant comporte un premier stade, formant le coeur des particules, élastomère relativement mou, ayant une temperature de transition vitreuse inférieure ou égale à 25°C, plymérisé, en l'absence de monomère de réticulation et de monomère de greffage, à partir d'un mélange comprenant, pour 100 parties en poids :

(a) de 50 à 100 parties en poids d'au moins un monomère principal choisi parmi les diènes conjugués et les acrylates d'alkyle ou d'aralkyle; et,

(b) de 0 à 50 parties en poids d'au moins un autre monomère à insaturation éthylénique copolymérisable avec ledit monomère principal,

les stades interne et externe constituant respectivement les second et troisième stades des particules d'interpolymère.

4. Interpolymère selon la revendication 1, caractérisé par le fait que les stades interne et externe représentent, pour 100 parties en poids, de l'interpolymère de chaque population, respectivement 0,5 à 90 parties en poids et 99,5 à 10 parties en poids.

5. Interpolymère selon la revendication 2, caractérisé par le fait que le premier, second et troisième stades des particules de morphologie dur-mou-dur représentent, pour 100 parties en poids de l'interpolymère de chaque population, respectivement de 10 à 40 parties en poids, de 20 à 60 parties en poids et de 10 à 70 parties en poids.

6. Interpolymère selon la revendication 3, caractérisé par le fait que les premier, second et troisième stades de particules de morphologie mou-mou-dur représentent, pour 100 parties en poids de l'interpolymère de chaque population, respectivement 3 à 80 parties en poids, 10 à 60 parties en poids et 10 à 60 parties en poids.

7. Interpolymère selon l'une des revendication 1 à 6, caractérisé par le fait que les monomères à insaturation monoéthylénique entrant dans la définition de (b) d'un stade non élastomère sont choisis parmi les acrylates d'alkyle, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique et l'acide méthacrylique.

8. Interpolymère selon l'une des revendications 1 à 7, caractérisé par le fait que les monomères à insaturation monoéthylénique entrant dans la définition de (b) d'un stade élastomère sont choisis parmis les méthacrylates d'alkyle, les acrylates d'alcoxy, l'acrylate de cyanéthyle, l'acrylonitrile, l'acrylamide, les acrylates d'hydroxyalkyle, les méthacrylates d'hydroxylalkyle, l'acide acrylique, l'acide méthacrylique et les hydrocarbures vinylaromatiques.

9. Interpolymère selon l'une des revendications 1 à 8, caractérisé par le fait que les monomères de réticulation entrant dans la définition de (c) d'un stade de coeur ou d'un stade intermédiaire, sont choisis parmi les polyméthacrylates et polyacrylates de polyols, les polyvinylbenzènes et l'acrylate et le méthacrylate de vinyle.

10. Interpolymère selon l'une des revendications 1 à 8, caractérisé par le fait que les monomères de greffage entrant dans la définition de (d) d'un stade de coeur, ou d'un stade intermédiaire, sont choisis parmi les esters d'allyle, de méthallyle ou de crotyle d'acides ou diacides carboxyliques $\alpha,\beta$-insaturés ; l'éther d'allyle, l'éther de méthallyle et l'éther de crotyle et de vinyle ; le thioéther d'allyle, le thioéther de méthallyle et le thioéther de crotyle et de vinyle ; le N-allyl-, le méthallyl- ou le crotyl-maléimide ; les esters vinyliques de l'acide 3-buténoïque et de l'acide 4-penténoïque ; le cyanurate de triallyle ; le phosphonate de 0-allyle, de méthallyle ou de crotyl-O-alkyle, d'aryle, d'alkaryle ou d'aralkyl-P-vinyle, d'allyle ou de méthallyle ; le phosphate de triallyle, de triméthallyle ou de tricrotyle; le phosphate de O-vinyle, de O,O-diallyle, de diméthallyle ou de dicrotyle ; les esters cycloalcényliques de l'acide acrylique, de l'acide méthacrylique, de l'acide maléique, de l'acide fumarique, de l'acide itaconique ; les esters bicyclo-(2,2,1)-hept-5-ène-2-yliques de l'acide acrylique, de l'acide méthacrylique, de l'acide maléique, de l'acide fumarique et de l'acide itaconique ; les éthers vinyliques et les thio-éthers vinyliques des cycloalcénols et des cycloalcène-thiols ; et les esters vinyliques des acides cycloalcène-carboxyliques.

11. Interpolymère selon l'une des revendications 1 à 10, caractérisé par le fait que les agents limiteurs de chaîne, entrant dans la définition de (c) d'un stade final sont choisis parmi les mercaptans, les polymercaptans, les composés polyhalogénés, les monoterpènes diinsaturés, les diterpènes monoinsaturés.

12. Interpolymère composite selon l'une des revendications 1 à 11, caractérisé par le fait qu'il se présente sous la forme d'un latex d'une concentration de 20 à 50% en poids dans l'eau.

13. Interpolymère composite selon l'une des revendications 1 à 11, caractérisé par le fait qu'il se présente sous la forme d'une poudre.

14. Procédé de préparation d'un interpolymère tel que défini à l'une des revendications 1 à 13, caractérisé par le fait qu'il consiste à :
   - former séparément, par polymérisation, une semence constituée par le (ou les) stade(s) interne(s) des populations (1) et (2) ;
   - mélanger les deux semences obtenues à l'étape précédente;
   - ajouter la charge des monomères correspondant au stade externe et la soumettre à des conditions de polymérisation,
   chaque polymérisation étant effectuée en émulsion, dans un milieu aqueux, en présence d'au moins un initiateur de radicaux libres et d'au moins un agent émulsifiant.

15. Composition thermoplastique consistant en un mélange comprenant, pour 100 parties en poids :
   - de 10 à 99 parties en poids d'un polymère thermoplastique rigide d'au moins un monomère choisi parmi les méthacrylates d'alkyle, dont le groupe alkyle comprend de 1 à 4 atomes de carbone, et les hydrocarbures vinylaromatiques ou d'un polymère de plus de 50% en poids d'au moins l'un de ces monomères et d'au moins un autre monomère copolymérisable à insaturation monoéthylénique ; et
   - de 90 à 1 parties en poids d'un interpolymère tel que défini à l'une des revendications 1 à 13.

16. Composition thermoplastique selon la revendication 15, caractérisé par le fait que la partie élastomère de la matière thermoplastique présente dans ladite composition représente de 18 à 40 parties en poids de cette dernière.

17. Tout article façonné obtenu au moyen de la composition thermoplastique telle que définie à l'une des revendications 15 et 16.

**Revendications pour l'Etat contractant suivant : ES**

1.  Procédé de préparation d'un interpolymère composite multi-couches, caractérisé par le fait qu'il consiste à :

    -   préparer séquentiellement, par polymérisation en émulsion, dans un milieu aqueux, en présence d'un initiateur de radicaux libres et d'un agent émulsifiant, des populations (1) et (2) de particules dudit interpolymère composite multi-couches, lequel comprend au moins :
        -   un stade interne, élastomère, ayant en soi une température de transition vitreuse inférieure ou égale à 25°C, que l'on polymérise à partir d'un mélange comprenant, pour 100 parties en poids :
            (a) de 50 à 99,9 parties en poids d'au moins un monomère principal choisi parmi les diènes conjugués et les acrylates d'alkyle ou d'aralkyle ;
            (b) de 0 à 49,9 parties en poids d'au moins un autre monomère à insaturation monoéthylénique copolymérisable avec ledit monomère principal ;
            (c) de 0,05 à 8 parties en poids d'au moins un monomère de réticulation ; et
            (d) de 0,05 à 6 parties en poids d'au moins un monomère de greffage ; et
        -   un stade externe, non élastomère, relativement dur, ayant en soi une température de transition vitreuse supérieure à 25°C, que l'on polymérise en présence du produit du stade précédent, à partir d'un mélange comprenant, pour 100 parties en poids :
            (a) de 50 à 99,9 parties en poids d'au moins un monomère principal choisi parmi les méthacrylates d'alkyle dont le groupe alkyle comporte de 1 à 4 atomes de carbone, les hydrocarbures vinylaromatiques et les nitriles insaturés ;
            (b) de 0,1 à 50 parties en poids d'au moins un monomère à insaturation monoéthylénique copolymérisable avec ledit monomère principal, et
            (c) de 0 à 5 parties en poids d'au moins un agent limiteur de chaîne,
            les particules de la population (1) ayant un diamètre moyen compris entre environ 40 et 150 nm, et celles de la population (2), un diamètre moyen compris entre environ 160 et 500 nm ; et
    -   mélanger les populations (1) et (2) de particules dans un rapport en poids de la population (1) à la population (2) compris entre environ 5/95 et environ 95/5, pour obtenir un interpolymère composite multicouches comportant une distribution bimodale de particules.

2.  Procédé de préparation d'un interpolymère composite multicouches, caractérisé par le fait qu'il consiste à :

    -   former séparément, par polymérisation, une semence constituée par le (ou les) stade(s) interne(s) d'une population de particules (1) et le (ou les) stade(s) externe(s) d'une population de particules (2), chaque stade interne étant un stade élastomère ayant en soi une température de transition vitreuse inférieure ou égale à 25°C, que l'on polymérise à partir d'un mélange comprenant, pour 100 parties en poids :
        (a) de 50 à 99,9 parties en poids d'au moins un monomère principal choisi parmi les diènes conjugués et les acrylates d'alkyle ou d'aralkyle ;
        (b) de 0 à 49,9 parties en poids d'au moins un autre monomère à insaturation monoéthylénique copolymérisable avec ledit monomère principal ;
        (c) de 0,05 à 8 parties en poids d'au moins un monomère de réticulation ; et
        (d) de 0,05 à 6 parties en poids d'au moins un monomère de greffage ;
    -   mélanger les deux semences obtenues à l'étape précédente ;
    -   ajouter la charge des monomères correspondant à un stade externe non élastomère, relativement dur, ayant en soi une température de transition vitreuse supérieure à 25°C, que l'on polymérise en présence du produit du stade précédent, à partir d'un mélange comprenant, pour 100 parties en poids :
        (a) de 50 à 99,9 parties en poids d'au moins un monomère principal choisi parmi les méthacrylates d'alkyle dont le groupe alkyle comporte de 1 à 4 atomes de carbone, les hydrocarbures vinylaromatiques et les nitriles insaturés ;
        (b) de 0,1 à 50 parties en poids d'au moins un monomère à insaturation monoéthylénique copolymérisable avec ledit monomère principal, et
        (c) de 0 à 5 parties en poids d'au moins un agent limiteur de chaîne, et
    -   soumettre ladite charge à des conditions de polymérisation,
    chaque polymérisation étant effectuée en émulsion, dans un milieu aqueux, en présence d'au moins un initiateur de radicaux libres et d'au moins un agent émulsifiant, la population de particules (1) étant définie comme ayant un diamètre moyen compris entre environ 40 et 150 nm, et la population de particules (2) étant définie comme ayant un diamètre moyen compris entre environ 160 et 500 nm, et le rapport en poids de la population (1) à la population (2) étant compris entre environ 5/95 et environ 95/5, pour obtenir un interpolymère composite multicouches comportant une distribution bimodale de particules.

3. Procédé selon la revendication 1, caractérisé par le fait que, pour former au moins une fraction des particules des populations (1) et (2) constituant ledit interpolymère, on prépare, dans une première séquence de polymérisation, un premier stade, formant le coeur des particules, non élastomère relativement dur, ayant une température de transition vitreuse supérieure à 25°C, que l'on polymérise à partir d'un mélange comprenant, pour 100 parties en poids :

(a) de 70 à 99,9 parties en poids d'au moins un monomère principal choisi parmi les méthacrylates d'alkyle dont le groupe alkyle comporte de 1 à 4 atomes de carbone, les hydrocarbures vinylaromatiques et les nitriles insaturés ;
(b) de 0,1 à 10 parties en poids d'au moins un autre monomère à insaturation monoéthylénique copolymérisable avec ledit monomère principal ; et
(c) de 0 à 10 parties en poids d'au moins un monomère de réticulation ; et
(d) de 0 à 10 parties en poids d'au moins un monomère de greffage,

les stades interne et externe constituant alors respectivement les second et troisième stades de ces particules d'interpolymère.

4. Procédé selon la revendication 1, caractérisé par le fait que, pour former au moins une fraction des particules des populations (1) et (2) constituant ledit interpolymère, on prépare, dans une première séquence de polymérisation, un premier stade, formant le coeur des particules, élastomère relativement mou, ayant une température de transition vitreuse inférieure ou égale à 25°C, que l'on polymérise, en l'absence de monomère de réticulation et de monomère de greffage, à partir d'un mélange comprenant, pour 100 parties en poids :

(a) de 50 à 100 parties en poids d'au moins un monomère principal choisi parmi les diènes conjugués et les acrylates d'alkyle ou d'aralkyle ; et
(b) de 0 à 50 parties en poids d'au moins un autre monomère à insaturation éthylénique copolymérisable avec ledit monomère principal,

les stades interne et externe contituant alors respectivement les second et troisième stades de ces particules d'interpolymère.

5. Procédé selon l'une des revendications 1 et 2, caractérisé par le fait qu'on prépare un interpolymère composite dont les stades interne et externe représentent, pour 100 parties en poids, de l'interpolymère de chaque population, respectivement 0,5 à 90 parties en poids et 99,5 à 10 parties en poids.

6. Procédé selon la revendication 3, caractérisé par le fait qu'on prépare un interpolymère composite dont les premier, second et troisième stades des particules de morphologie dur-mou-dur représentent, pour 100 parties en poids de l'interpolymère de chaque population, respectivement de 10 à 40 parties en poids, de 20 à 60 parties en poids et de 10 à 70 parties en poids.

7. Procédé selon la revendication 4, caractérisé par le fait qu'on prépare un interpolymère composite dont les premier, second et troisième stades de particules de morphologie mou-mou-dur représentent, pour 100 parties en poids de l'interpolymère de chaque population, respectivement 3 à 80 parties en poids, 10 à 60 parties en poids et 10 à 60 parties en poids.

8. Procédé selon l'une des revendications 1 à 7, caractérisé par le fait qu'on choisit les monomères à insaturation monoéthylénique entrant dans la définition de (b) d'un stade non élastomère, parmi les acrylates d'alkyle, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique et l'acide méthacrylique.

9. Procédé selon l'une des revendications 1 à 8, caractérisé par le fait qu'on choisit les monomères à insaturation monoéthylénique entrant dans la définition de (b) d'un stade élastomère, parmi les méthacrylates d'alkyle, les acrylates d'alcoxy, l'acrylate de cyanéthyle, l'acrylonitrile, l'acrylamide, les acrylates d'hydroxyalkyle, les méthacrylates d'hydroxyalkyle, l'acide acrylique, l'acide méthacrylique et les hydrocarbures vinylaromatiques.

10. Procédé selon l'une des revendications 1 à 9, caractérisé par le fait qu'on choisit les monomères de réticulation entrant dans la définition de (c) d'un stade de coeur ou d'un stade intermédiaire, parmi les polyméthacrylates et polyacrylates de polyols, les polyvinylbenzènes et l'acrylate et le méthacrylate de vinyle.

11. Procédé selon l'une des revendications 1 à 9, caractérisé par le fait qu'on choisit les monomères de greffage entrant dans la définition de (d) d'un stade de coeur, ou d'un stade intermédiaire, parmi les esters d'allyle, de méthallyle ou de crotyle d'acides ou diacides carboxyliques $\alpha,\beta$-insaturés ; l'éther d'allyle, l'éther de méthallyle et l'éther de crotyle et de vinyle ; le thioéther d'allyle, le thioéther de méthallyle et le thioéther de crotyle et de vinyle ; le N-allyl-, le méthallyl- ou le crotyl-maléimide ; les esters vinyliques de l'acide 3-buténoïque et de l'acide 4-penténoïque , le cyanurate de triallyle ; le phosphonate de O-allyle, de méthallyle ou de crotyl-O-alkyle, d'aryle, d'alkaryle ou d'aralkyl-P-vinyle, d'allyle ou de méthallyle ; le phosphate de triallyle, de triméthallyle ou de tricrotyle ; le phosphate de O-vinyle, de O,O-diallyle, de diméthallyle ou de dicrotyle ; les esters cycloalcényliques de l'acide acrylique, de l'acide méthacrylique, de l'acide maléique, de l'acide fumarique, de l'acide itaconique ; les esters bicyclo-(2,2,1)-hept-5-ène-2-yliques de l'acide acrylique, de l'acide méthacrylique, de l'acide maléique, de l'acide fumarique et de l'acide itaconique ; les esters vinyliques et les thio-éthers vinyliques des cycloalcénols et des cycloalcène-thiols ; et les esters vinyliques des acides cycloalcène-carboxyliques.

12. Procédé selon l'une des revendications 1 à 11, caractérisé par le fait qu'on choisit les agents limiteurs de chaîne, entrant dans la définition de (c) d'un stade final parmi les mercaptans, les polymercaptans, les composés polyhalogénés, les monoterpènes diinsaturés, les diterpènes monoinsaturés.

13. Procédé selon l'une des revendications 1 à 12, caractérisé par le fait qu'on prépare un interpolymère composite se présentant sous la forme d'un latex d'une concentration de 20 à 50% en poids dans l'eau.

14. Procédé selon l'une des revendications 1 à 12, caractérisé par le fait qu'on prépare un interpolymère composite se présentant sous la forme d'une poudre.

15. Procédé de préparation d'une composition thermmoplastique, caractérisé par le fait qu'il consiste à mélanger :
  - de 10 à 99 parties en poids d'un polymère thermoplastique rigide d'au moins un monomère choisi parmi les méthacrylates d'alkyle, dont le groupe alkyle comprend de 1 à 4 atomes de carbone, et les hydrocarbures vinylaromatiques ou d'un polymère de plus de 50% en poids d'au moins l'un de ces monomères et d'au moins un autre monomère copolymérisable à insaturation monoéthylénique ; et
  - de 90 à 1 partie en poids d'un interpolymère préparé par un procédé tel que défini à l'une des revendications 1 à 14,
  procédé dans lequel on mélange les deux composants se présentant tous deux sous la forme d'une poudre, afin de préparer une composition de moulage ; ou bien on effectue le mélange en mettant la matière interpolymère en suspension dans le mélange des monomères ou dans le sirop de prépolymère devant conduire à la matrice thermoplastique rigide ; ou bien on place la matière interpolymère composite en émulsion, suspension et dispersion dans l'eau ou un composé organique, dans le mélange à couler devant conduire à la matrice, l'eau ou le composé organique étant éliminé avant ou après la formation, par coulée, de la matrice ; ou bien on mélange la matière interpolymère et la matrice thermoplastique rigide tous deux à l'état d'émulsion, de suspension ou de solution dans un système aqueux ou non aqueux, les particules étant isolées de l'eau ou du composé organique par coagulation, séchage par pulvérisation, ou par des moyens de séparation.

16. Procédé selon la revendication 15, caractérisé par le fait qu'on prépare une composition thermoplastique dont la partie élastomère représente de 18 à 40 parties en poids de cette dernière.

17. Tout article façonné obtenu au moyen de la composition thermoplastique préparée par le procédé tel que défini à l'une des revendications 15 et 16.

14

**Claims**

**Claims for the following Contracting States : AT, BE, CH, DE, FR, GB, GR, IT, LI, LU, NL, SE**

1. Multilayer composite interpolymer comprising at least:
   - an elastomeric internal stage which in itself has a glass transition temperature lower than or equal to 25°C, polymerised by starting with a mixture comprising, per 100 parts by weight:
     (a) from 50 to 99.9 parts by weight of at least one main monomer chosen from conjugated dienes and alkyl or aralkyl acrylates;
     (b) from 0 to 49.9 parts by weight of at least one other monomer containing monoethylenic saturation copolymerisable with the said main monomer;
     (c) from 0.05 to 8 parts by weight of at least one crosslinking monomer; and
     (d) from 0.05 to 6 parts by weight of at least one grafting monomer; and
   - a relatively hard, nonelastomeric external stage which in itself has a glass transition temperature higher than 25°C, polymerised in the presence of the product of the preceding stage, by starting with a mixture comprising, per 100 parts by weight:
     (a) from 50 to 99.9 parts by weight of at least one main monomer chosen from alkyl methacrylates in which the alkyl group contains from 1 to 4 carbon atoms, vinylaromatic hydrocarbons and unsaturated nitriles;
     (b) from 0.1 to 50 parts by weight of at least one monomer containing monoethylenic unsaturation copolymerisable with the said main monomer, and
     (c) from 0 to 5 parts by weight of at least one chain limiter agent,
   characterised in that it has a bimodal particle distribution and that it consists of a mixture:
     (1) of a population of particles whose mean diameter is between approximately 40 and 150 nm; and
     (2) a population of particles whose mean diameter is between approximately 160 and 500 nm,
   in a weight ratio of the population (1) to the population (2) of between approximately 5/95 and approximately 95/5.

2. Interpolymer according to Claim 1, characterised in that at least a fraction of the particles of which it consists comprises a relatively hard, nonelastomeric first stage forming the core of the particles, which has a glass transition temperature higher than 25°C, polymerised by starting with a mixture comprising, per 100 parts by weight,
   (a) from 70 to 99.9 parts by weight of at least one main monomer chosen from alkyl methacrylates in which the alkyl group contains from 1 to 4 carbon atoms, vinylaromatic hydrocarbons and unsaturated nitriles;
   (b) from 0.1 to 10 parts by weight of at least one other monomer containing monoethylenic unsaturation copolymerisable with the said main monomer;
   (c) from 0 to 10 parts by weight of at least one crosslinking monomer; and
   (d) from 0 to 10 parts by weight of at least one grafting monomer,
   the internal and external stages constituting the second and third stages of the interpolymer particles respectively.

3. Interpolymer according to Claim 1, characterised in that at least a fraction of the particles of which it consists comprises a relatively soft elastomeric first stage forming the core of the particles, which has a glass transition temperature lower than or equal to 25°C, polymerised, in the absence of any crosslinking monomer or grafting monomer, by starting with a mixture comprising, per 100 parts by weight:
   (a) from 50 to 100 parts by weight of at least one main monomer chosen from conjugated dienes and alkyl or aralkyl acrylates; and
   (b) from 0 to 50 parts by weight of at least one other monomer containing ethylenic unsaturation copolymerisable with the said main monomer,
   the internal and external stages constituting the second and third stages of the interpolymer particles respectively.

4. Interpolymer according to Claim 1, characterised in that the internal and external stages represent, per 100 parts by weight of the interpolymer of each population, 0.5 to 90 parts by weight and 99.5 to 10 parts by weight respectively.

5. Interpolymer according to Claim 2, characterised in that the first, second and third stages of particles of hard-soft-hard morphology represent, per 100 parts by weight of the interpolymer of each population, from 10 to 40 parts by weight, from 20 to 60 parts by weight and from 10 to 70 parts by weight respectively.

6. Interpolymer according to Claim 3, characterised in that the first, second and third stages of particles of soft-soft-hard morphology represent, per 100 parts by weight of the interpolymer of each population, 3 to 80 parts by weight, 10 to 60 parts by weight and 10 to 60 parts by weight respectively.

7. Interpolymer according to one of Claims 1 to 6, characterised in that the monomers containing monoethylenic unsaturation forming part of the definition of (b) of a nonelastomeric stage are chosen from alkyl acrylates, alkoxy acrylates, cyanoethyl acrylate, acrylonitrile, acrylamide, hydroxyalkyl acrylates, hydroxyalkyl methacrylates, acrylic acid and methacrylic acid.

8. Interpolymer according to one of Claims 1 to 7, characterised in that the monomers containing monoethylenic unsaturation forming part of the definition of (b) of an elastomeric stage are chosen from alkyl methacrylates, alkoxy acrylates, cyanoethyl acrylate, acrylonitrile, acrylamide, hydroxyalkyl acrylates, hydroxyalkyl methacrylates, acrylic acid, methacrylic acid and vinylaromatic hydrocarbons.

9. Interpolymer according to one of Claims 1 to 8, characterised in that the crosslinking monomers forming part of the definition of (c) of a core stage or of an intermediate stage are chosen from polyol polymethacrylates and polyacrylates, polyvinylbenzenes and vinyl acrylate and methacrylate.

10. Interpolymer according to one of Claims 1 to 8, characterised in that the grafting monomers forming part of the definition of (d) of a core stage, or of an intermediate state, are chosen from allyl, methallyl or crotyl esters of $\alpha,\beta$-unsaturated carboxylic acids or diacids, allyl ether, methallyl ether and crotyl vinyl ether, allyl thioether, methallyl thioether and crotyl vinyl thioether, N-allyl-, methallyl- or crotylmaleimide, vinyl esters of 3-butenoic acid and of 4-pentenoic acid, triallyl cyanurate; O-allyl, methallyl or crotyl O-alkyl, aryl, alkaryl or aralkyl P-vinyl, allyl or methallyl phosphonate, triallyl, trimethallyl or tricrotyl phosphate, O-vinyl, O,O-diallyl, dimethallyl or dicrotyl phosphate, cycloalkenyl esters of acrylic acid, of methacrylic acid, of maleic acid, of fumaric acid, of itaconic acid, bicyclo[2.2.1]hept-5-en-2-yl esters of acrylic acid, of methacrylic acid, of maleic acid, of fumaric acid and of itaconic acid; vinyl ethers and vinyl thioethers of cycloalkenols and cycloalkenethiols, and the vinyl esters of cycloalkenecarboxylic acids.

11. Interpolymer according to one of Claims 1 to 10, characterised in that the chain limiter agents forming part of the definition of (c) of a final stage are chosen from mercaptans, polymercaptans, polyhalogenated compounds, diunsaturated monoterpenes and monounsaturated diterpenes.

12. Composite interpolymer according to one of Claims 1 to 11, characterised in that it is in the form of a latex with a concentration of 20 to 50 % by weight in water.

13. Composite interpolymer according to one of Claims 1 to 11, characterised in that it is in the form of a powder.

14. Process for the preparation of an interpolymer as defined in one of Claims 1 to 13, characterised in that it consists in
    - forming separately, by polymerisation, a seed consisting of the internal stage(s) of the populations (1) and (2);
    - mixing the two seeds obtained in the preceding step;
    - adding the charge of the monomers corresponding to the external stage and subjecting it to polymerisation conditions,
    each polymerisation being performed in emulsion, in an aqueous medium, in the presence of at least one free-radical initiator and of at least one emulsifying agent.

15. Thermoplastic composition consisting of a mixture comprising, per 100 parts by weight:
    - from 10 to 99 parts by weight of a rigid thermoplastic polymer of at least one monomer chosen from alkyl methacrylates in which the alkyl group contains from 1 to 4 carbon atoms, and vinylaromatic hydrocarbons, or of a polymer of more than 50 % by weight of at least one of these monomers and of at least one other copolymerisable monomer containing monoethylenic unsaturation; and

- from 90 to 1 parts by weight of an interpolymer as defined in one of Claims 1 to 13.

16. Thermoplastic composition according to Claim 15, characterised in that the elastomeric part of the thermoplastic material present in the said composition represents from 18 to 40 parts by weight of the latter.

17. Any shaped article obtained by means of the thermoplastic composition as defined in either of Claims 15 and 16.

**Claims for the following Contracting State : ES**

1. Process for the preparation of a multilayer composite interpolymer characterised in that it consists in:
   - preparing sequentially, by polymerisation in emulsion, in an aqueous medium, in the presence of a free-radical initiator and of an emulsifying agent, populations (1) and (2) of particles of the said multilayer composite interpolymer, which comprises at least:
   - an elastomeric internal stage which in itself has a glass transition temperature lower than or equal to 25°C, which is polymerised by starting with a mixture comprising, per 100 parts by weight:
     (a) from 50 to 99.9 parts by weight of at least one main monomer chosen from conjugated dienes and alkyl or aralkyl acrylates;
     (b) from 0 to 49.9 parts by weight of at least one other monomer containing monoethylenic unsaturation copolymerisable with the said main monomer;
     (c) from 0.05 to 8 parts by weight of at least one crosslinking monomer; and
     (d) from 0.05 to 6 parts by weight of at least one grafting monomer; and
   - a relatively hard, nonelastomeric external stage which in itself has a glass transition temperature higher than 25°C, which is polymerised in the presence of the product of the preceding stage, by starting with a mixture comprising, per 100 parts by weight:
     (a) from 50 to 99.9 parts by weight of at least one main monomer chosen from alkyl methacrylates in which the alkyl group contains from 1 to 4 carbon atoms, vinylaromatic hydrocarbons and unsaturated nitriles;
     (b) from 0.1 to 50 parts by weight of at least one monomer containing monoethylenic unsaturation copolymerisable with the said main monomer, and
     (c) from 0 to 5 parts by weight of at least one chain limiter agent,
     the particles of the population (1) having a mean diameter of between approximately 40 and 150 nm, and those of the population (2), a mean diameter of between approximately 160 and 500 nm; and
   - mixing the populations (1) and (2) of particles in a weight ratio of population (1) to population (2) of between approximately 5/95 and approximately 95/5, to obtain a multilayer composite interpolymer comprising a bimodal particle distribution.

2. Process for the preparation of a multilayer composite interpolymer, characterised in that it consists in:
   - forming separately, by polymerisation, a seed consisting of the internal stage(s) of a particle population (1) and the external stage(s) of a particle population (2), each internal stage being an elastomeric stage having in itself a glass transition temperature lower than or equal to 25°C, which is polymerised by starting with a mixture comprising, per 100 parts by weight:
     (a) from 50 to 99.9 parts by weight of at least one main monomer chosen from conjugated dienes and alkyl or aralkyl acrylates;
     (b) from 0 to 49.9 parts by weight of at least one other monomer containing monoethylenic unsaturation copolymerisable with the said main monomer;
     (c) from 0.05 to 8 parts by weight of at least one crosslinking monomer; and
     (d) from 0.05 to 6 parts by weight of at least one grafting monomer;
   - mixing the two seeds obtained in the preceding step;
   - adding the charge of the monomers corresponding to a relatively hard, nonelastomeric external stage having in itself a glass transition temperature higher than 25°C, which is polymerised in the presence of the product of the preceding stage, by starting with a mixture comprising, per 100 parts by weight:

(a) from 50 to 99.9 parts by weight of at least one main monomer chosen from alkyl methacrylates in which the alkyl group contains from 1 to 4 carbon atoms, vinylaromatic hydrocarbons and unsaturated nitriles;

(b) from 0.1 to 50 parts by weight of at least one monomer containing monoethylenic unsaturation copolymerisable with the said main monomer, and

(c) from 0 to 5 parts by weight of at least one chain limiter agent, and

- subjecting the said charge to polymerisation conditions, each polymerisation being performed in emulsion, in an aqueous medium, in the presence of at least one free-radical initiator and of at least one emulsifying agent, the particle population (1) being defined as having a mean diameter of between approximately 40 and 150 nm, and the particle population (2) being defined as having a mean diameter of between approximately 160 and 500 nm, and the weight ratio of population (1) to population (2) being between approximately 5/95 and approximately 95/5 to obtain a multilayer composite interpolymer comprising a bimodal particle distribution.

3. Process according to Claim 1, characterised in that, in order to form at least one fraction of the particles of the populations (1) and (2) constituting the said interpolymer, a relatively hard, nonelastomeric first stage is prepared forming the core of the particles, which has a glass transition temperature higher than 25°C, which is polymerised by starting with a mixture comprising, per 100 parts by weight:

(a) from 70 to 99.9 parts by weight of at least one main monomer chosen from alkyl methacrylates in which the alkyl group contains from 1 to 4 carbon atoms, vinylaromatic hydrocarbons and unsaturated nitriles;

(b) from 0.1 to 10 parts by weight of at least one other monomer containing monoethylenic unsaturation copolymerisable with the said main monomer;

(c) from 0 to 10 parts by weight of at least one crosslinking monomer; and

(d) from 0 to 10 parts by weight of at least one grafting monomer,

the internal and external stages then constituting the second and third stages of these interpolymer particles respectively.

4. Process according to Claim 1, characterised in that, in order to form at least one fraction of the particles of the populations (1) and (2) constituting the said interpolymer, a relatively soft elastomeric first stage forming the core of the particles is prepared, which has a glass transition temperature lower than or equal to 25°C, which is polymerised, in the absence of any crosslinking monomer or grafting monomer, by starting with a mixture comprising, per 100 parts by weight:

(a) from 50 to 100 parts by weight of at least one main monomer chosen from conjugated dienes and alkyl or aralkyl acrylates; and

(b) from 0 to 50 parts by weight of at least one other monomer containing ethylenic unsaturation copolymerisable with the said main monomer,

the internal and external stages then constituting the second and third stages of these interpolymer particles respectively.

5. Process according to either of Claims 1 and 2, characterised in that a composite interpolymer is prepared in which the internal and external stages represent, per 100 parts by weight of the interpolymer of each population, 0.5 to 90 parts by weight and 99.5 to 10 parts by weight respectively.

6. Process according to Claim 3, characterised in that a composite interpolymer is prepared in which the first, second and third stages of particles of hard-soft-hard morphology represent, per 100 parts by weight of the interpolymer of each population, from 10 to 40 parts by weight, from 20 to 60 parts by weight and from 10 to 70 parts by weight respectively.

7. Process according to Claim 4, characterised in that a composite interpolymer is prepared in which the first, second and third stages of particles of soft-soft-hard morphology represent, per 100 parts by weight of the interpolymer of each population, 3 to 80 parts by weight, 10 to 60 parts by weight and 10 to 60 parts by weight respectively.

8. Process according to one of Claims 1 to 7, characterised in that the monomers containing monoethylenic unsaturation forming part of the definition of (b) of a nonelastomeric stage are chosen from alkyl acrylates, alkoxy acrylates, cyanoethyl acrylate, acrylonitrile, acrylamide, hydroxyalkyl acrylates,

18

hydroxyalkyl methacrylates, acrylic acid and methacrylic acid.

9. Process according to one of Claims 1 to 8, characterised in that the monomers containing monoethylenic unsaturation forming part of the definition of (b) of an elastomeric stage are chosen from alkyl methacrylates, alkoxy acrylates, cyanoethyl acrylate, acrylonitrile, acrylamide, hydroxyalkyl acrylates, hydroxyalkyl methacrylates, acrylic acid, methacrylic acid and vinylaromatic hydrocarbons.

10. Process according to one of Claims 1 to 9, characterised in that the crosslinking monomers forming part of the definition of (c) of a core stage or of an intermediate stage are chosen from polyol polymethacrylates and polyacrylates, polyvinylbenzenes and vinyl acrylate and methacrylate.

11. Process according to one of Claims 1 to 9, characterised in that the grafting monomers forming part of the definition of (d) of a core stage, or of an intermediate stage, are chosen from allyl, methallyl or crotyl esters of $\alpha,\beta$-unsaturated carboxylic acids or diacids, allyl ether, methallyl ether and crotyl vinyl ether, allyl thioether, methallyl thioether and crotyl vinyl thioether, N-allyl-, methallyl- or crotylmaleimide, vinyl esters of 3-butenoic acid and of 4-pentenoic acid, triallyl cyanurate, O-allyl, methallyl or crotyl O-alkyl, aryl, alkaryl or aralkyl P-vinyl, allyl or methallyl phosphonate, triallyl, trimethallyl or tricrotyl phosphate, O-vinyl, O,O-diallyl, dimethallyl or dicrotyl phosphate, cycloalkenyl esters of acrylic acid, of methacrylic acid, of maleic acid, of fumaric acid, of itaconic acid, bicyclo[2.2.1]hept-5-en-2-yl esters of acrylic acid, of methacrylic acid, of maleic acid, of fumaric acid and of itaconic acid, vinyl ethers and vinyl thioethers of cycloalkenols and cycloalkenethiols, and the vinyl esters of cycloalkenecarboxylic acids.

12. Process according to one of Claims 1 to 11, characterised in that the chain limiter agents forming part of the definition of (c) of a final stage are chosen from mercaptans, polymercaptans, polyhalogenated compounds, diunsaturated monoterpenes and monounsaturated diterpenes.

13. Process according to one of Claims 1 to 12, characterised in that a composite interpolymer is prepared which is in the form of a latex with a concentration of 20 to 50 % by weight in water.

14. Process according to one of Claims 1 to 12, characterised in that a composite interpolymer is prepared which is in the form of a powder.

15. Process for the preparation of a thermoplastic composition, characterised in that it consists in mixing:
   - from 10 to 99 parts by weight of a rigid thermoplastic polymer of at least one monomer chosen from alkyl methacrylates in which the alkyl group contains from 1 to 4 carbon atoms, and vinylaromatic hydrocarbons, or of a polymer of more than 50 % by weight of at least one of these monomers and of at least one other copolymerisable monomer containing monoethylenic unsaturation; and
   - from 90 to 1 part by weight of an interpolymer prepared by a process as defined in one of Claims 1 to 14,
   in which process the two components are mixed, both being in the form of a powder, in order to prepare a moulding compound; or else the mixing is performed by suspending the interpolymeric material in the mixture of the monomers or in the prepolymer syrup which is to produce the rigid thermoplastic matrix; or else the composite interpolymeric material is emulsified, suspended and dispersed in water or an organic compound, in the casting mixture which is to produce the matrix, the water or the organic compound being removed before or after the formation, by casting, of the matrix; or else the interpolymeric material and the rigid thermoplastic matrix are mixed, both being in the form of emulsion, suspension or solution in an aqueous or nonaqueous system, the particles being isolated from the water or the organic compound by coagulation, spray-drying or by means of separation.

16. Process according to Claim 15, characterised in that a thermoplastic composition is prepared the elastomeric part of which represents from 18 to 40 parts by weight of the latter.

17. Any shaped article obtained by means of the thermoplastic composition prepared by the process as defined in either of Claims 15 and 16.

**Patentansprüche**

**Patentansprüche für folgende Vertragsstaaten : AT, BE, CH, DE, FR, GB, GR, IT, LI, LU, NL, SE**

1. Polymerverbundwerkstoff, bestehend aus mindestens:
   - einem elastomeren inneren Bereich mit einer Glasübergangstemperatur von kleiner oder gleich 25°C, der ausgehend von einer Mischung polymerisiert wurde, die auf 100 Gewichtsteile enthält:
     a) 50 bis 99,9 Gewichtsteile wenigstens eines Hauptmonomeren, ausgewählt aus konjugierten Dienen und Alkyl- oder Aralkylacrylaten;
     b) 0 bis 49,9 Gewichtsteile wenigstens eines anderen monoethylenisch ungesättigten Monomeren, das mit dem genannten Hauptmonomeren copolymerisierbar ist;
     c) 0,05 bis 8 Gewichtsteile wenigstens eines vernetzenden Monomeren und
     d) 0,05 bis 6 Gewichtsteile wenigstens eines Pfropfmonomeren und
   - einem relativ harten, nichtelastomeren äußeren Bereich mit einer Glasübergangstemperatur von größer 25°C, der in Gegenwart des vorher genannten inneren Bereichs polymerisiert wurde, ausgehend von einer Mischung, die auf 100 Gewichtsteile enthält:
     a) 50 bis 99,9 Gewichtsteile wenigstens eines Hauptmonomeren, ausgewählt aus Alkylmethacrylaten, deren Alkylgruppen 1 bis 4 Kohlenstoffatome besitzen, vinylaromatischen Kohlenwasserstoffen und ungesättigten Nitrilen;
     b) 0,1 bis 50 Gewichtsteile wenigstens eines monoethylenisch ungesättigten Monomeren, das mit dem genannten Hauptmonomeren copolymerisierbar ist und
     c) 0 bis 5 Gewichtsteile wenigstens einer Reglersubstanz,
   dadurch gekennzeichnet, daß er eine bimodale Teilchenverteilung besitzt und aus einer Mischung besteht mit:
     1) einer Teilchenverteilung von einem mittleren Durchmesser von ungefähr 40 bis 150 nm; und
     2) einer Teilchenverteilung von einem mittleren Durchmesser von ungefähr 160 bis 500 nm,
   in einem Gewichtsverhältnis der Verteilung (1) zur Verteilung (2) zwischen ungefähr 5:95 und 95:5.

2. Polymerverbundwerkstoff nach Anspruch 1, dadurch gekennzeichnet, daß wenigstens ein Teil der ihn ausmachenden Teilchen, einen primären, den Kern der Teilchen darstellenden, relativ harten nichtelastomeren Bereich bildet, der eine Glasübergangstemperatur von größer 25°C besitzt und der ausgehend von einer Mischung polymerisiert wurde, die auf 100 Gewichtsteile enthält:
   a) 70 bis 99,9 Gewichtsteile wenigstens eines Hauptmonomeren, ausgewählt aus Alkylmethacrylaten, deren Alkylgruppen 1 bis 4 Kohlenstoffatome besitzen, vinylaromatischen Kohlenwasserstoffen und ungesättigten Nitrilen;
   b) 0,1 bis 10 Gewichtsteile wenigstens eines anderen monoethylenisch ungesättigten Monomeren, das mit dem genannten Hauptmonomeren copolymerisierbar ist;
   c) 0 bis 10 Gewichtsteile wenigstens eines vernetzenden Monomeren und
   d) 0 bis 10 Gewichtsteile wenigstens eines Pfropfmonomeren,
   wobei die inneren und äußeren Bereiche dementsprechend die zweite beziehungsweise dritte Schicht der Verbundpolymerteilchen darstellen.

3. Polymerverbundwerkstoff nach Anspruch 1, dadurch gekennzeichnet, daß wenigstens ein Teil der ihn ausmachenden Teilchen, einen primären, den Kern der Teilchen darstellenden, relativ weichen elastomeren Bereich bildet, der eine Glasübergangstemperatur von kleiner oder gleich 25°C besitzt und der in Abwesenheit eines vernetzenden Monomeren oder eines Pfropfmonomeren polymerisiert wurde, ausgehend von einer Mischung, die auf 100 Gewichtsteile enthält:
   a) 50 bis 100 Gewichtsteile wenigstens eines Hauptmonomeren, ausgewählt aus konjugierten Dienen und Alkyl- oder Aralkylacrylaten und
   b) 0 bis 50 Gewichtsteile wenigstens eines anderen ethylenisch ungesättigten Monomeren, das mit dem genannten Hauptmonomeren copolymerisierbar ist,
   wobei die inneren und äußeren Bereiche entsprechend die zweite und dritte Schicht der Verbundpolymerteilchen darstellen.

4. Polymerverbundwerkstoff nach Anspruch 1, dadurch gekennzeichnet, daß die inneren und äußeren Bereiche, bezogen auf 100 Gewichtsteile des Verbundpolymeren jeder Verteilung, 0,5 bis 90 Gewichtsteile, beziehungsweise 99,5 bis 10 Gewichtsteile ausmachen.

5. Polymerverbundwerkstoff nach Anspruch 2, dadurch gekennzeichnet, daß die ersten, zweiten und dritten Bereiche der Teilchen mit hart-weich-harter Morphologie, bezogen auf 100 Gewichtsteile des Verbundpolymeren jeder Verteilung, dementsprechend 10 bis 40 Gewichtsteile, 20 bis 60 Gewichtsteile und 10 bis 70 Gewichtsteile ausmachen.

6. Polymerverbundwerkstoff nach Anspruch 3, dadurch gekennzeichnet, daß die ersten, zweiten und dritten Bereiche der Teilchen mit weich-weich-harter Morphologie, bezogen auf 100 Gewichtsteile des Verbundpolymeren jeder Verteilung, dementsprechend 3 bis 80 Gewichtsteile, 10 bis 60 Gewichtsteile und 10 bis 60 Gewichtsteile ausmachen.

7. Polymerverbundwerkstoff nach einem der Ansprüche 1 bis 6, dadurch gekennzeichnet, daß die ethylenisch ungesättigten Monomeren, die gemäß Buchstabe (b) in nichtelastomerer Form eingebaut werden, ausgewählt werden aus Alkylacrylaten, Alkoxyalkylaten, Cyanoethylacrylaten, Acrylnitril, Acrylamid, Hydroxyalkylacrylaten, Hydroxyalkylmethacrylaten, Acryl- und Methacrylsäure.

8. Polymerverbundwerkstoff nach einem der Ansprüche 1 bis 7, dadurch gekennzeichnet, daß die monoethylenisch ungesättigten Monomeren, die gemäß Buchstabe (b) in elastomerer Form eingebaut werden, ausgewählt werden aus Alkylmethacrylaten, Alkoxyacrylaten, Cyanoethylacrylaten, Acrylnitril, Acrylamid, Hydroxyalkylacrylaten, Hydroxyalkylmethacrylaten, Acryl- und Methacrylsäure und vinylaromatischen Kohlenwasserstoffen.

9. Polymerverbundwerkstoff nach einem der Ansprüche 1 bis 8, dadurch gekennzeichnet, daß die vernetzenden Monomeren, die gemäß Buchstabe (c) in einen Kern- oder Zwischenbereich eingebaut werden, ausgewählt werden aus Polymethacrylaten oder Polyacrylaten von Polyolen, Polyvinylbenzol sowie Vinylmeth- und Vinylacrylaten.

10. Polymerverbundwerkstoff nach einem der Ansprüche 1 bis 8, dadurch gekennzeichnet, daß die Pfropfmonomeren, die gemäß Buchstabe (d) in einen Kern- oder Zwischenbereich eingebaut werden, ausgewählt werden aus Allyl-, Methallyl- oder Crotylestern von alpha, beta-ungesättigten Carbon- oder Dicarbonsäuren, Allylethern, Methallylethern oder dem Vinyl- und Crotylether, Allylthioethern, Methallylthioether und dem Vinyl- und Crotylthioether, N-Allyl-, Methallyl- oder Crotylmaleimid, Vinylestern der 3-Buten- und 4-Pentensäure, Triallylcyanurat, O-Allyl-, Methallyl-, Crotyl-O-alkyl-, Aryl-, Alkaryl-, P-Vinylaralkyl-, Allyl- oder Methallylphosphonaten, Triallyl-, Trimethallyl- oder Tricrotylphosphaten, Cycloalkenylestern der Acryl-, Methacryl- Malein-, Fumar oder Itakonsäure, den (2,2,1)-Bicyclo-5-hept-2-enylestern der Acryl-, Methacryl-, Malein-, Fumar- und Itakonsäure, den Vinylethern und Vinylthioethern der Cycloalkenole und Cycloalkenthiole und den Vinylestern von Cycloalkencarbonsäuren.

11. Polymerverbundwerkstoff nach einem der Ansprüche 1 bis 10, dadurch gekennzeichnet, daß die Reglersubstanzen, die gemäß Buchstabe (c) im Endstadium einwirken, ausgewählt werden aus Mercaptanen, Polymercaptanen, polyhalogenierten Verbindungen, zweifach ungesättigten Monoterpenen, einfach ungesättigten Diterpenen.

12. Polymerverbundwerkstoff nach einem der Ansprüche 1 bis 11, dadurch gekennzeichnet, daß er in Form eines wässrigen Latex mit einer Konzentration von 20 bis 50 Gewichtsprozent erhalten wird.

13. Polymerverbundwerkstoff nach einem der Ansprüche 1 bis 11, dadurch gekennzeichnet, daß er in Form eines Pulvers erhalten wird.

14. Verfahren zur Herstellung eines Polymerverbundwerkstoffs gemäß einem der Ansprüch 1 bis 13, dadurch gekennzeichnet, daß er gebildet wird, indem man:
- getrennt eine Vorstufe bestehend aus dem (den) inneren Bereich(en) der Verteilungen (1) und (2) durch Polymerisation herstellt
- die zwei im vorhergehenden Schritt erhaltenen Vorstufen vermischt
- die Menge der für den äußeren Bereich benötigten Monomere hinzufügt und sie einer Polymerisation unterwirft,
wobei jede Polymerisation in wässriger Phase, in Gegenwart wenigstens eines radikalischen Initiators und wenigstens eines Emulgators, in Emulsion durchgeführt wird.

**15.** Thermoplastische Zusammensetzung, bestehend aus einer Mischung, die auf 100 Gewichtsteile enthält:

- 10 bis 99 Gewichtsteile eines harten thermoplastischen Polymeren aus wenigstens einem Monomeren, ausgewählt aus Alkylmethacrylaten, deren Alkylgruppe 1 bis 4 Kohlenstoffatome enthält, und vinylaromatischen Kohlenwasserstoffen oder einem Polymeren mit mehr als 50 Gewichtsprozent wenigstens eines dieser Monomeren und wenigstens eines anderen Monomeren, das über den monoethylenisch ungesättigten Rest copolymerisierbar ist und
- 90 bis 1 Gewichtsteile eines Polymerverbundwerkstoffs nach einem der Ansprüche 1 bis 13.

**16.** Thermoplastische Zusammensetzung nach Anspruch 15, dadurch gekennzeichnet, daß der elastomere Teil des thermoplastischen Materials, der in der genannten thermoplastischen Zusammensetzung enthalten ist, 18 bis 40 Gewichtsteile des letzteren beträgt.

**17.** Alle geformten Gegenstände, die sich mittels der thermoplastischen Zusammensetzung nach einem der Ansprüche 15 und 16 herstellen lassen.

**Patentansprüche für folgenden Vertragsstaat : ES**

**1.** Verfahren zur Herstellung eines mehrschichtigen Polymerverbundwerkstoffes, gekennzeichnet durch die Tatsache, daß es besteht aus:

- Herstellung nacheinander durch Emulsionspolymerisation, in einem wäßrigen Milieu in Gegenwart eines Initiators mit freien Radikalen und eines Emulgators, der Partikelverteilungen (1) und (2) des Polymerverbundwerkstoffes, der wenigstens enthält:
  - einen elastomeren inneren Bereich mit einer Glasübergangstemperatur von kleiner oder gleich 25°C, den man ausgehend von einer Mischung polymerisiert, die auf 100 Gewichtsteile enthält:
    (a) 50 bis 99,9 Gewichtsteile wenigstens eines Hauptmonomeren, ausgewählt aus konjugierten Dienen und Alkyl- oder Aralkylacrylaten;
    (b) 0 bis 49,9 Gewichtsteile wenigstens eines anderen monoethylenisch ungesättigten Monomeren, das mit dem Hauptmonomeren copolymerisierbar ist;
    (c) 0,05 bis 8 Gewichtsteile wenigstens eines vernetzenden Monomeren; und
    (d) 0,05 bis 6 Gewichtsteile wenigstens eines Pfropfmonomeren und
  - einen relativ harten, nichtelastomeren äußeren Bereich mit einer Glasübergangstemperatur über 25°C, den man in Gegenwart des vorher genannten inneren Bereiches, ausgehend von einer Mischung polymerisiert, die auf 100 Gewichtsteile enthält:
    (a) 50 bis 99,9 Gewichtsteile wenigstens eines Hauptmonomeren, ausgewählt aus Alkylmethacrylaten, deren Alkylgruppe 1 bis 4 Kohlenstoffatome hat, vinylaromatischen Kohlenwasserstoffen und ungesättigten Nitrilen;
    (b) 0,1 bis 50 Gewichtsteile wenigstens eines monoethylenisch ungesättigten Monomeren, das mit dem Hauptmonomeren copolymerisierbar ist, und
    (c) 0 bis 5 Gewichtsteile wenigstens eines Kettenbegrenzers,
    wobei die Teilchenverteilung (1) einen mittleren Durchmesser von ungefähr 40 bis 150 nm und die Teilchenverteilung (2) einen mittleren Durchmesser von ungefähr 160 bis 500 nm hat; und
- die Teilchenverteilungen (1) und (2) in einem Gewichtsverhältnis der Verteilung (1) zur Verteilung (2) zwischen ungefähr 5:95 und ungefähr 95:5 vermischt werden, um einen mehrschichtigen Polymerverbundwerkstoff mit bimodaler Teilchenverteilung zu erhalten.

**2.** Verfahren zur Herstellung eines Polymerverbundwerkstoffes, gekennzeichnet durch die Tatsache, daß es besteht aus:

- getrennte Herstellung durch Polymerisation einer Vorstufe bestehend aus dem (den) inneren Bereich(en) einer Teilchenverteilung (1) und dem (den) äußeren Bereich(en) einer Teilchenverteilung (2), wobei jeder innere Bereich ein elastomerer Bereich ist, der eine Glasübergangstemperatur kleiner oder gleich 25°C hat und den man ausgehend von einer Mischung polymerisiert, die auf 100 Gewichtsteile enthält:
  (a) 50 bis 99,9 Gewichtsteile wenigstens eines Hauptmonomeren, ausgewählt aus konjugierten Dienen und Alkyl- oder Aralkylacrylaten;
  (b) 0 bis 49,9 Gewichtsteile wenigstens eines anderen monoethylenisch ungesättigten Monomeren, das mit dem Hauptmonomeren copolymerisierbar ist;
  (c) 0,05 bis 8 Gewichtsteile wenigstens eines vernetzenden Monomeren; und

22

(d) 0,05 bis 6 Gewichtsteile wenigstens eines Pfropfmonomeren;

- die zwei im vorhergehenden Schritt erhaltenen Vorstufen vermischt;
- die Menge der Monomeren hinzufügt, die dem äußeren nichtelastomeren, relativ harten Bereich entsprechen, der eine Glasübergangstemperatur über 25°C besitzt und den man in Gegenwart des genannten inneren Bereiches ausgehend von einer Mischung polymerisiert, die auf 100 Gewichtsteile enthält:

(a) 50 bis 99,9 Gewichtsteile wenigstens eines Hauptmonomeren, ausgewählt aus Alkylmethacrylaten, deren Alkylgruppe 1 bis 4 Kohlenstoffatome hat, vinylaromatischen Kohlenwasserstoffen und ungesättigten Nitrilen;

(b) 0,1 bis 50 Gewichtsteile wenigstens eines monoethylenisch ungesättigten Monomeren, das mit dem Hauptmonomeren copolymerisierbar ist, und

(c) 0 bis 5 Gewichtsteile wenigstens eines Kettenbegrenzers, und

- die genannte Menge einer Polymerisation unterwirft,

wobei jede Polymerisation in Emulsion, in einem wäßrigen Milieu, in Gegenwart von wenigstens einem Initiator mit freien Radikalen und wenigstens einem Emulgator durchgeführt wird und die Teilchenverteilung (1) einen mittleren Durchmesser von ungefähr 40 bis 150 nm aufweist, und die Teilchenverteilung (2) einen mittleren Durchmesser von ungefähr 160 bis 500 nm aufweist, und das Gewichtsverhältnis der Verteilung (1) zur Verteilung (2) zwischen ungefähr 5:95 und ungefähr 95:5 liegt, um einen mehrschichtigen Polymerverbundwerkstoff mit bimodaler Teilchenverteilung zu erhalten.

3. Verfahren nach Anspruch 1, dadurch gekennzeichnet, daß man, um wenigstens eine Fraktion der das Verbundpolymer ausmachenden Teilchenverteilungen (1) und (2) zu bilden, in einem ersten Polymerisationsschritt einen primären, den Kern der Teilchen darstellenden, relativ harten nichtelastomeren Bereich herstellt, der eine Glasübergangstemperatur über 25°C besitzt und den man ausgehend von einer Mischung polymerisiert, die auf 100 Gewichtsteile enthält:

(a) 70 bis 99,9 Gewichtsteile wenigstens eines Hauptmonomeren, ausgewählt aus Alkylmethacrylaten, deren Alkylgruppe 1 bis 4 Kohlenstoffatome besitzt, vinylaromatischen Kohlenwasserstoffen und ungesättigten Nitrilen;

(b) 0,1 bis 10 Gewichtsteile wenigstens eines anderen monoethylenisch ungesättigten Monomeren, das mit dem Hauptmonomeren copolymerisierbar ist; und

(c) 0 bis 10 Gewichtsteile wenigstens eines vernetzenden Monomeren; und

(d) 0 bis 10 Gewichtsteile wenigstens eines Pfropfmonomeren,

wobei die inneren und äußeren Bereiche dann dementsprechend die zweite und dritte Schicht der Verbundpolymerteilchen darstellen.

4. Verfahren nach Anspruch 1, dadurch gekennzeichnet, daß man, um wenigstens eine Fraktion der das Verbundpolymer ausmachenden Teilchen (1) und (2) zu bilden, in einem ersten Polymerisationsschritt einen primären, den Kern der Teilchen darstellenden, relativ weichen elastomeren Bereich herstellt, der eine Glasübergangstemperatur von kleiner oder gleich 25°C besitzt und der in Abwesenheit eines vernetzenden Monomeren oder eines Pfropfmonomeren ausgehend von einer Mischung polymerisiert wird, die auf 100 Gewichtsteile enthält:

(a) 50 bis 100 Gewichtsteile wenigstens eines Hauptmonomeren, ausgewählt aus konjugierten Dienen und Alkyl- oder Aralkylacrylaten; und

(b) 0 bis 50 Gewichtsteile wenigstens eines anderen ethylenisch ungesättigten Monomeren, das mit dem Hauptmonomeren copolymerisierbar ist,

wobei die inneren und äußeren Bereiche dann dementsprechend die zweite und dritte Schicht der Verbundpolymerteilchen darstellen.

5. Verfahren nach einem der Ansprüche 1 oder 2, dadurch gekennzeichnet, daß man ein Verbundpolymer herstellt, dessen innere und äußere Bereiche, bezogen auf 100 Gewichtsteile des Verbundpolymeren jeder Verteilung, 0,5 bis 90 Gewichtsteile, beziehungsweise 99,5 bis 10 Gewichtsteile ausmachen.

6. Verfahren nach Anspruch 3, dadurch gekennzeichnet, daß man ein Verbundpolymer herstellt, dessen erste, zweite und dritte Bereiche der Teilchen mit hart-weich-harter Morphologie, bezogen auf 100 Gewichtsteile des Verbundpolymeren jeder Verteilung, jeweils 10 bis 40 Gewichtsteile, 20 bis 60 Gewichtsteile und 10 bis 70 Gewichtsteile ausmachen.

**7.** Verfahren nach Anspruch 4, dadurch gekennzeichnet, daß man ein Verbundpolymer herstellt, dessen erste, zweite und dritte Bereiche der Teilchen mit weich-weich-harter Morphologie, bezogen auf 100 Gewichtsteile des Verbundpolymeren jeder Verteilung, jeweils 3 bis 80 Gewichtsteile, 10 bis 60 Gewichtsteile und 10 bis 60 Gewichtsteile ausmachen.

**8.** Verfahren nach einem der Ansprüche 1 bis 7, dadurch gekennzeichnet, daß man die monoethylenisch ungesättigten Monomeren gemäß der Definition (b) eines nichtelastomeren Zustands aus Alkylacrylaten, Alkoxyacrylaten, Cyanoethylacrylaten, Acrylnitril, Acrylamid, Hydroxyalkylacrylaten, Hydroxyalkylmethacrylaten, Acryl- und Methacrylsäure auswählt.

**9.** Verfahren nach einem der Ansprüche 1 bis 8, dadurch gekennzeichnet, daß man die monoethylenisch ungesättigten Monomeren gemäß der Definition (b) eines elastomeren Zustands aus Alkylmethacrylaten, Alkoxyacrylaten, Cyanoethylacrylaten, Acrylnitril, Acrylamid, Hydroxyalkylacrylaten, Hydroxyalkylmethacrylaten, Acryl- und Methacrylsäure und vinylaromatischen Kohlenwasserstoffen auswählt.

**10.** Verfahren nach einem der Ansprüche 1 bis 9, dadurch gekennzeichnet, daß man die vernetzenden Monomeren, gemäß der Definition (c) eines Kern- oder Zwischenbereiches aus Polymethacrylaten oder Polyacrylaten von Polyolen, Polyvinylbenzolen sowie Vinylmeth- und Vinylacrylaten auswählt.

**11.** Verfahren nach einem der Ansprüche 1 bis 9, dadurch gekennzeichnet, daß man die Pfropfmonomeren gemäß der Definition (d) eines Kern- oder Zwischenbereichs aus Allyl-, Methallyl- oder Crotylestern von alpha, beta-ungesättigten Carbon- oder Dicarbonsäuren; Allylether, Methallylether und Vinyl-Crotylether; Allylthioether, Methallylthioether und Vinyl-Crotylthioether; N-Allyl-, Methallyl- oder Crotylmaleimid; Vinylestern der 3-Buten- und 4-Pentensäure, Triallylcyanurat; O-Allyl-, Methallyl-, oder Crotyl-O-alkyl-, Aryl-, Alkaryl-, p-Vinylaralkyl-, Allyl- oder Methallylphosphonaten, Triallyl-, Trimethallyl- oder Tricrotylphosphaten, O-Vinyl-, O,O-Diallyl-, Dimethallyl- oder Dicrotylphosphat; Cycloalkenylestern der Acryl-, Methacryl-, Malein-, Fumar-, Itakonsäure, den (2,2,1)-Bicyclo-5-hept-2- enylestern der Acryl-, Methacryl-, Malein-, Fumar- und Itakonsäure; den Vinylethern und Vinylthioethern der Cycloalkenole und Cycloalkenthiole; und den Vinylestern von Cycloalkencarbonsäuren auswählt.

**12.** Verfahren nach einem der Ansprüche 1 bis 11, dadurch gekennzeichnet, daß man Kettenbegrenzer, gemäß der Definition (c) des Endstadiums aus Mercaptanen, Polymercaptanen, polyhalogenierten Verbindungen, zweifach ungesättigten Monoterpenen, einfach ungesättigten Diterpenen auswählt.

**13.** Verfahren nach einem der Ansprüche 1 bis 12, dadurch gekennzeichnet, daß man ein Verbundpolymer in Form eines wäßrigen Latex mit einer Konzentration von 20 bis 50 Gewichtsprozent herstellt.

**14.** Verfahren nach einem der Ansprüche 1 bis 12, dadurch gekennzeichnet, daß man ein Verbundpolymer in Form eines Pulvers herstellt.

**15.** Verfahren zur Herstellung einer thermoplastischen Zusammensetzung, dadurch gekennzeichnet, daß gemischt werden:
- 10 bis 99 Gewichtsteile eines harten thermoplastischen Polymeren aus wenigstens einem Monomeren, ausgewählt aus Alkylmethacrylaten, deren Alkylgruppe 1 bis 4 Kohlenstoffatome enthält, und vinylaromatischen Kohlenwasserstoffen oder einem Polymeren mit mehr als 50 Gewichtsprozent wenigstens eines dieser Monomeren und wenigstens eines anderen Monomeren, das über den monoethylenisch ungesättigten Rest copolymerisierbar ist und
- 90 bis 1 Gewichtsteile eines nach einem der Ansprüche 1 bis 14 hergestellten Verbundpolymeres,

indem man die beiden jeweils in Form eines Pulvers vorliegenden Komponenten vermischt, um eine Formmasse herzustellen; oder die Mischung durchführt, indem man das Verbundpolymere als Suspension in die Monomerenmischung oder in den Sirup des Prepolymeren gibt, das zu der thermoplastischen starren Matrix führen soll; oder man gibt den Polymerverbundwerkstoff als Emulsion, Suspension oder Dispersion in Wasser oder einer organischen Substanz in die Gußmischung, die das Formteil ergeben soll, wobei das Wasser oder die organische Substanz vor oder nach der Formgebung durch Ausgießen aus der Matrix entfernt wird; oder man vermischt das Verbundpolymer und die thermoplastische starre Matrix jeweils im emulgierten, suspendierten oder gelösten Zustand in einem wäßrigen oder nicht wäßrigen System, wobei die Partikel vom Wasser oder der organischen Substanz durch Koagulation, Sprühtrocknung, oder Trennmittel isoliert werden.

16. Verfahren nach Anspruch 15, dadurch gekennzeichnet, daß man eine thermoplastische Zusammensetzung herstellt, deren elastomerer Teil 18 bis 40 Gewichtsteile der letzteren beträgt.

17. Alle geformten Gegenstände, die sich mittels der thermoplastischen Zusammensetzung nach einem der Ansprüche 15 und 16 herstellen lassen.